# EUROPÄISCHE PATENTSCHRIFT

(11) **EP 3 410 333 B1**
(45) Veröffentlichungstag und Bekanntmachung des Hinweises auf die Patenterteilung: **16.09.2020**
(21) Anmeldenummer: 18170552.6
(22) Anmeldetag: 03.05.2018
(51) Int. Cl.: G06F 21/44, G06F 21/62, G06F 21/73

(54) **VERFAHREN ZUR SICHEREN ZUGRIFFSKONTROLLE MIT EINEM FELDMESSGERÄT DER PROZESSTECHNIK UND EIN ENTSPRECHENDES FELDMESSGERÄT DER PROZESSMESSTECHNIK**
METHOD FOR SECURE COMMUNICATIONS WITH A FIELD MEASURING INSTRUMENT USED FOR PROCESS TECHNOLOGY AND CORRESPONDING FIELD MEASURING INSTRUMENT USED FOR PROCESS TECHNOLOGY
PROCÉDÉ DE COMMUNICATION SÉCURISÉE AVEC UN APPAREIL DE MESURE DE TERRAIN DE LA TECHNIQUE DE MESURE DE PROCESSUS ET APPAREIL DE MESURE DE TERRAIN DE LA TECHNIQUE DE MESURE DE PROCESSUS CORRESPONDANT

(30) Priorität: 31.05.2017 DE 102017111939
(43) Veröffentlichungstag der Anmeldung: 05.12.2018
(73) Patentinhaber: Krohne Messtechnik GmbH, 47058 Duisburg (DE)
(72) Erfinder: Brockhaus, Helmut, 46145 Oberhausen (DE)
(74) Vertreter: Gesthuysen Patent- und Rechtsanwälte

(56) Entgegenhaltungen:
- EP-A1- 2 557 728
- DE-A1-102012 109 348
- US-A1- 2002 059 518
- US-A1- 2004 093 526

## Beschreibung

Die Erfindung betrifft ein Verfahren zur sicheren Kommunikation mit einem Feldmessgerät der Prozessmesstechnik, wobei das Feldmessgerät einen Sensor, eine Auswerteeinheit, eine Feldbusschnittstelle zur Übermittlung der von dem Feldmessgerät erfassten und bereitgestellten Messdaten an andere Busteilnehmer und/oder an ein Prozessleitsystem und eine Kommunikationsschnittstelle aufweist, und wobei ein externes Kommunikationsmittel über die Kommunikationsschnittstelle von extern auf informationstechnische Inhalte des Feldmessgeräts zugreift, wobei es sich bei den informationstechnischen Inhalten nicht um die eigentlichen Messdaten handelt. Darüber hinaus betrifft die Erfindung auch ein Feldmessgerät der Prozessmesstechnik mit einem Sensor, einer Auswerteeinheit, einer Feldbusschnittstelle zur Übermittlung der von dem Feldmessgerät erfassten und bereitgestellten Messdaten an andere Busteilnehmer und/oder an ein Prozessleitsystem und einer Kommunikationsschnittstelle, wobei informationstechnische Inhalte des Feldmessgeräts für ein externes Kommunikationsmittel über die Kommunikationsschnittstelle von extern zugreifbar sind und wobei es sich bei den informationstechnischen Inhalten (Pi, Fi) nicht um die eigentlichen Messdaten handelt.

Feldmessgeräte der Prozessmesstechnik werden seit vielen Jahrzehnten in der Automatisierungstechnik zur Messwerterfassung in industriellen Prozessen eingesetzt. Die Feldmessgeräte erfassen messtechnisch über ihre Sensoren Prozessgrößen, bereiten die Rohmessdaten mit der Auswerteeinheit in eine zu übermittelnde Messgröße auf und übertragen diese Messgröße meist an ein übergeordnetes Prozessleitsystem. Die Messgeräte arbeiten "im Feld", sie sind im Regelfall sehr robust und störsicher ausgelegt, da sie allen Widrigkeiten des industriellen Prozesses ausgesetzt sind, teilweise werden sie im Freien eingesetzt, es liegen üblicherweise also keine "Laborbedingungen" vor.

Zur Übermittlung der Messdaten bedient sich das Feldmessgerät einer Feldbusschnittstelle, die ein etabliertes Protokoll realisiert. Zu den etablierten Feldbusschnittstellen gehören beispielsweise die seit Jahrzehnten eingesetzte analoge 4-20 mA-Schnittstelle oder auch die digitale HART-Schnittstelle.

Als physikalisches Übertragungsmedium dient in diesem Fall oft eine 2-Leiter-Anordnung, wobei dem analogen Stromsignal der Stromschnittstelle das digitale Signal des HART-Protokolls aufmoduliert wird. Feldbusschnittstellen dieser Art realisieren nur vergleichsweise geringe Übertragungsraten, gleichwohl haben sie eine außerordentlich hohe Bestandskraft in der Prozessindustrie, da ihre Zuverlässigkeit nachgewiesen ist und sie als beeinflussungssicher gelten. Über Feldbusschnittstellen kann oft nur in sehr beschränktem Maße auf das Feldmessgerät Einfluss genommen werden, da ein Zugriff auf Funktionalitäten des Prozessmessgeräts, die außerhalb der eigentlichen Übertragung von Messergebnissen liegen, über die Feldbusschnittstelle - absichtlich - überhaupt nicht vorgesehen sind.

Sensible und damit zu schützende Funktionalitäten von Feldmessgeräten, die außerhalb des Bereichs der Messdatenübertragung liegen, betreffen beispielsweise die Parametrierung, die Einstellung von Betriebsmodi, Kalibrierungsparameter des Prozessmessgeräts und die Diagnose.

Seit einiger Zeit gehen Bestrebungen dahin, die zuvor beschriebenen Feldmessgeräte mit einer - weiteren - Kommunikationsschnittstelle auszustatten, mit der meist modernere Kommunikationstechnologien realisiert werden, sodass höhere Übertragungsraten und moderne Bedienschnittstellen umsetzbar sind. Über diese Kommunikationsschnittstelle sollen im Wesentlichen nichtprozessrelevante Daten ausgetauscht werden.

Aus dem Stand der Technik ist bekannt, mit Rechteumfängen zu arbeiten, die Einfluss auf die Kommunikation mit dem Feldgerät haben. Dazu wird verwiesen auf die DE 10 2012 109 348 A1, die US 2004/093526 A1, die EP 2 557 728 A1 und die US2002/059518 A1.

Gegenstand der vorliegenden Betrachtung sind solche Feldmessgeräte, die über eine Kommunikationsschnittstelle verfügen, über die es einem externen Kommunikationsmittel möglich ist, auf informationstechnische Inhalte des Feldmessgeräts zuzugreifen, wobei es sich bei diesen informationstechnischen Inhalten nicht um die eigentlichen Messdaten handelt. Es handelt sich also nicht um eine Prozessschnittstelle, über die das Feldmessgerät Messdaten ausgibt.

Aufgabe der vorliegenden Erfindung ist es, ein Verfahren zur sicheren Kommunikation mit einem Feldmessgerät der Prozesstechnik und ein entsprechendes Feldmessgerät anzugeben, bei dem mit hoher Sicherheit ein missbräuchlicher Zugriff auf das Feldmessgerät mittels einer Kommunikationsschnittstelle verhindert wird.

Die Aufgabe ist bei dem eingangs beschriebenen Verfahren zur sicheren Kommunikation mit einem Feldmessgerät der Prozessmesstechnik zunächst und im Wesentlichen dadurch gelöst, dass in dem Feldmessgerät eine Mehrzahl an Rechteumfängen hinterlegt wird, wobei jeder Rechteumfang definiert, in welchem Umfang auf die informationstechnischen Inhalte des Feldmessgeräts zugegriffen werden kann, in dem Feldmessgerät eine Mehrzahl öffentlicher Schlüssel einer korrespondierenden Mehrzahl asymmetrischer Schlüsselpaare gespeichert wird und jedem öffentlichen Schlüssel wenigstens ein Rechteumfang zugeordnet wird, bei Kontaktaufnahme des externen Kommunikationsmittels mit dem Feldmessgerät über die Kommunikationsschnittstelle sich das externe Kommunikationsmittel mittels einer Public-Key Authentifizierung mit dem gespeicherten privaten Schlüssel gegenüber dem Feldmessgerät authentisiert, das Feldmessgerät das externe Kommunikationsmittel unter Verwendung eines geeigneten und im Feldmessgerät gespeicherten öffentlichen Schlüssels authentifiziert und das Feldmessgerät nach erfolgreicher Authentifizierung eine Bediensitzung eröffnet, in der dem externen Kommunikationsmittel Zugriff auf die informationstechnischen Inhalte des Feldmessgeräts gewährt wird, und zwar in dem Rechteumfang des öffentlichen Schlüssels, der dem geeigneten privaten Schlüssel entspricht.

Bei dem vorliegenden Verfahren ist der Rechteumfang, innerhalb dessen auf die informationstechnischen Inhalte des Feldmessgeräts von einem externen Kommunikationsmittel zugegriffen werden kann, an die Verwendung eines geeigneten Schlüssels eines asymmetrischen Schlüsselpaares gekoppelt. Das asymmetrische Schlüsselpaar dient hier nicht dem verschlüsselten Austausch von Nutzdaten zwischen dem Feldmessgerät und dem externen Kommunikationsmittel, das asymmetrische Schlüsselpaar wird hier zur Public-Key Authentifizierung des externen Kommunikationsmittels gegenüber dem Feldmessgerät verwendet. Natürlich widerspricht es der Lehre der vorliegenden Erfindung nicht, wenn der nachfolgende, also auf die Authentifizierung folgende Informationsaustausch zwischen dem Feldmessgerät und dem externen Kommunikationsmittel über die Kommunikationsschnittstelle verschlüsselt erfolgt. Von grundlegender Bedeutung ist jedoch, dass das Feldmessgerät so eingerichtet ist, dass die Möglichkeit und die Erfordernis bestehen, dass sich das externe Kommunikationsmittel gegenüber dem Feldmessgerät durch einen Beitrag - der in Zusammenhang mit dem privaten Schlüssel des externen Kommunikationsmittels steht - authentisiert und es so dem Feldmessgerät möglich ist, das externe Kommunikationsmittel zu authentifizieren. Die Authentifikation - also die Überprüfung der Echtheit des externen Kommunikationsmittels - erfolgt im Feldmessgerät anhand der dort hinterlegten öffentlichen Schlüssel. Ist mit keinem der in dem Feldmessgerät hinterlegten öffentlichen Schlüssel eine Authentifikation des externen Kommunikationsmittels möglich, kann das externe Kommunikationsmittel nicht auf informationstechnische Inhalte des Feldmessgeräts zugreifen, es wird also keine Bediensitzung eröffnet.

Die Asymmetrie des Schlüsselpaares liegt darin, dass der private und der öffentliche Schlüssel verschieden sind und es praktisch unmöglich ist, aus dem öffentlichen Schlüssel eine Umkehrfunktion bzw. den privaten Schlüssel zu berechnen. Das erleichtert insbesondere die Problematik der Schlüsselverteilung, da lediglich die privaten Schlüssel geheim zu halten sind.

Bei den informationstechnischen Inhalten des Feldmessgeräts kann es sich sowohl um reine Dateninhalte handeln, wie beispielsweise Parameter und gesetzte Flags, als auch auch um Funktionen, also Algorithmen, die als Argumente Daten verwenden, also mit den Dateninhalten arbeiten.

Wenn es heißt, dass sich das externe Kommunikationsmittel mittels einer Public-Key Authentifizierung mit dem gespeicherten privaten Schlüssel gegenüber dem Feldmessgerät authentisiert, dann bedeutet das nicht, dass das externe Kommunikationsmittel seinen privaten Schlüssel oder einen seiner privaten Schlüssel dem Feldmessgerät direkt zur Kenntnis bringt. Die Authentisierung erfolgt bevorzugt so, dass der private Schlüssel des externen Kommunikationsmittels geheim bleibt. Dies kann beispielsweise so funktionieren, dass das Feldmessgerät dem externen Kommunikationsmittel einen Zufallsstring übermittelt, das externe Kommunikationsmittel den Zufallsstring mit seinem privaten Schlüssel verschlüsselt, den verschlüsselten Zufallsstring an das Feldmessgerät übermittel, wo der verschlüsselten Zufallsstring mit dem öffentlichen Schlüssel des Feldmessgeräts entschlüsselt wird. Bei Übereinstimmung des erzeugten Zufallsstrings mit dem rückübermittelten ver- und entschlüsselten Zufallsstring ist die Authentifizierung gelungen. Ähnlich kann mit signierten Dateninhalten verfahren werden, wobei sich das externe Kommunikationsmittel durch Erstellen einer digitalen Signatur gegenüber dem Feldmessgerät authentisiert. Speziell bei der letzten Variante kann eine sonst häufig verwendete Kennworteingabe entfallen (beispielsweise Eingabe einer Passphrase zur Freigabe eines privaten Schlüssels), eine automatische Authentifizierung ist so möglich.

Bei einer bevorzugten Ausbildung des Verfahrens ist vorgesehen, dass die Kommunikationsschnittstelle auf dem Bluetooth-Standard beruht. Bei Einsatz dieser Technologie muss das externe Kommunikationsmittel, beispielsweise in Form eines Hand-Bediengeräts, sich in unmittelbarer Nähe zu dem Feldmessgerät befinden, gegenüber dem sich das externe Kommunikationsmittel authentisiert. Bei anderen bevorzugten Ausgestaltungen ermöglicht die Kommunikationsschnittstelle die Errichtung eines drahtlosen lokalen Netzwerks (WLAN), die Verwendung einer Infrarot-Verbindung (IR) oder die Etablierung einer Ethernet-Verbindung.

Bei einer weiteren Ausgestaltung des erfindungsgemäßen Verfahrens zur sicheren Kommunikation mit einem Feldmessgerät ist vorgesehen, dass ein in dem Feldmessgerät hinterlegter Rechteumfang das Zugriffsrecht auf eine Gruppe der folgenden informationstechnischen Inhalte gestattet: Parameter für die Darstellung von Daten ohne Einfluss auf messtechnische Funktionen, Parameter für die Inbetriebnahme messtechnischer Funktionen, Parameter für die Kalibrierung des Feldmessgeräts, Parameter für Sonderfunktionen und Service und Parameter für die Freischaltung von Sonderfunktionen. Durch eine geeignete Wahl der Rechteumfänge ist es insbesondere möglich, verschiedenen Erfordernissen der Betriebssicherheit Rechnung zu tragen, also beispielsweise Anforderungen, die in Zusammenhang stehen mit der Erreichung eines bestimmten Safety Integrity Level (SIL), Anforderungen in den Bereichen Safety und Security oder einfach Anforderungen hinsichtlich benutzerbezogener Rechte durch Implementierung von Benutzerebenen.

Vor diesem Hintergrund ist es einleuchtend, dass das Recht zur Veränderung von Parametern für die Darstellung von Daten ohne Einfluss auf messtechnische Funktionen weniger restriktiv vergeben wird als beispielsweise das Recht für die Veränderung von Parametern für die Kalibrierung des Feldmessgeräts, das nur einem nur sehr beschränkten Personenkreis zu Teil wird, beispielsweise nur bestimmten Stellen beim Hersteller des Feldmessgeräts, der über geeignete Einrichtungen zur Kalibrierung verfügt. So ist es auch sinnvoll, qualifiziertem Service-Personal einen weitreichenderen Zugriff auf informationstechnische Inhalte des Feldmessgeräts einzuräumen, als dies für den reinen Anwender des Feldmessgeräts möglich ist. Eine vorteilhafte Anwendung besteht auch in der Freigabe von Sonderfunktionen, die der Anwender vom Hersteller des Feldmessgeräts nachträglich erworben hat und die sich mithilfe einer entsprechenden Authentifizierung freischalten lassen bzw. automatisch freigeschaltet werden, sobald eine Bediensitzung mit dem entsprechenden Schlüssel gestartet worden ist.

Gemäß einer vorteilhaften Ausgestaltung sieht das beanspruchte Verfahren vor, dass in einer Mehrzahl an Feldmessgeräten dieselben Rechteumfänge hinterlegt werden und dieselben öffentlichen Schlüssel einer korrespondierenden Mehrzahl asymmetrischer Schlüsselpaare gespeichert werden. Durch diese Maßnahme ist es auf besonders einfache Art und Weise möglich, mit einem externen Kommunikationsmittel, das über die entsprechenden privaten Schlüssel verfügt, auf eine Mehrzahl an Feldmessgeräten zuzugreifen.

Eine besondere Weiterbildung des Verfahrens zeichnet sich dadurch aus, dass die Mehrzahl an Feldmessgeräten zu wenigstens einer der folgenden Messgerätegruppen gehört: Die Messgerätegruppe eines bestimmten Messverfahrens, die Messgerätegruppe eines Feldmessgerätemodells, die Messgerätegruppe der Feldmessgeräte eines bestimmten Benutzers bzw. Eigentümers, die Messgerätegruppe der Feldmessgeräte einer Anlage oder eines Anlagenteils, die Messgerätegruppe der Feldmessgeräte eines bestimmten zeitlichen Produktionsintervalls oder Installationsintervalls. Die vorgenannten Messgerätegruppen bilden im Wesentlichen Zugriffsrechte für unterschiedlich qualifizierte Personengruppen ab. So kann es sinnvoll sein, dass der Zugriff für Servicetechniker, die beispielsweise im Bereich der Durchflussmessgeräte oder der Radarmessgeräte ausgebildet sind, auch auf genau solche Feldmessgeräte beschränkt ist. Möglicherweise ist es auch erforderlich, den Zugriff auf bestimmte Feldmessgerätemodelle einzuschränken, wenn hier besondere Qualifikationen erforderlich sind, beispielsweise im Explosionsschutz. Eine Zugriffbeschränkung auf eine industrielle Anlage oder einen bestimmten industriellen Anlagenteil kann auch sinnvoll sein, wenn klare Verantwortlichkeiten für derartige Bereiche vergeben sind. Genauso erschließen sich Anwendungsfälle für die anderen genannten Messgerätegruppen.

Auch die Frage nach der Beendigung einer etablierten Bediensitzung ist wichtig. Bei bevorzugten Ausgestaltungen des Verfahrens wird eine Bediensitzung beispielsweise beendet nach der Vornahme einer vorbestimmten Anzahl an Zugriffen auf die informationstechnischen Inhalte des Feldmessgeräts und/oder nach Ablauf einer vorbestimmten Zeitdauer seit Start der Bediensitzung und/oder nach Übertragung einer Information zur expliziten Beendigung der Bediensitzung und/oder nach Auftreten eines Fehlerzustandes in dem Feldmessgerät. Die verschiedenen Kriterien können in dem Verfahren separat für sich oder auch in Kombination implementiert sein.

Bei einer weiteren Ausgestaltung des Verfahrens ist vorgesehen, dass in dem externen Kommunikationsmittel mehrere private Schlüssel hinterlegt sind und sich das externe Kommunikationsmittel mittels einer Public-Key Authentifizierung gegenüber dem Feldmessgerät authentisiert, indem Identifikationsdaten des Feldmessgeräts an das externe Kommunikationsmittel übertragen werden, das externe Kommunikationsmittel auf Grundlage der Identifikationsdaten einen geeigneten privaten Schlüssel auswählt und das externe Kommunikationsmittel sich mit dem ausgewählten geeigneten privaten Schlüssel gegenüber dem Feldmessgerät authentisiert. Diese Variante ermöglicht die zielgerichtete Auswahl eines im externen Kommunikationsmittel hinterlegten privaten Schlüssels aus einer Vielzahl von privaten Schlüsseln, wenn eine Verbindung zu einem bestimmten Feldmessgerät aufgenommen wird. Dadurch ist es möglich, eine sichere Kommunikation mit einer Vielzahl von verschiedenen Feldmessgeräten aufzunehmen, auch wenn diese mit ganz unterschiedlichen asymmetrischen Schlüsselpaaren bzw. den entsprechenden öffentlichen Schlüsseln ausgestattet sind.

Bei einer Variante des beanspruchten Verfahrens zur sicheren Kommunikation mit einem Feldmessgerät wird der Authentifizierungsvorgang ausgelöst durch eine entsprechende Eingabe an einer Bedieneinheit des Feldmessgeräts.

Bei einer weiteren Ausgestaltung des Verfahrens treten das externe Kommunikationsmittel und das Feldmessgerät über die Kommunikationsschnittstelle mittels eines verschlüsselten Secure-Shell-Netzwerkprotokolls (SSH) in Verbindung, wobei sich das externe Kommunikationsmittel per Public-Key Authentifizierung gegenüber dem Feldmessgerät authentisiert, es wird also nicht die Eingabe eines Kennwortes verlangt.

Bei dem eingangs beschriebenen Feldmessgerät der Prozessmesstechnik ist die hergeleitete Aufgabe dadurch gelöst, dass in dem Feldmessgerät eine Mehrzahl an Rechteumfängen hinterlegt ist, wobei jeder Rechteumfang definiert, in welchem Umfang auf die informationstechnischen Inhalte des Feldmessgeräts zugegriffen werden kann, in dem Feldmessgerät eine Mehrzahl öffentlicher Schlüssel einer korrespondierenden Mehrzahl asymmetrischer Schlüsselpaare gespeichert sind und jedem öffentlichen Schlüssel ein Rechteumfang zugeordnet ist, wobei in dem externen Kommunikationsmittel wenigstens ein privater Schlüssel der korrespondierenden Mehrzahl asymmetrischer Schlüsselpaare gespeichert ist, bei Kontaktaufnahme des externen Kommunikationsmittels mit dem Feldmessgerät über die Kommunikationsschnittstelle sich das externe Kommunikationsmittel mittels einer Public-Key Authentifizierung mit dem gespeicherten privaten Schlüssel gegenüber dem Feldmessgerät authentisiert, das Feldmessgerät das externe Kommunikationsmittel unter Verwendung eines geeigneten und im Feldmessgerät gespeicherten öffentlichen Schlüssels authentifiziert und das Feldmessgerät nach erfolgreicher Authentifizierung eine Bediensitzung eröffnet, in der dem externen Kommunikationsmittel Zugriff auf die informationstechnischen Inhalte des Feldgeräts gewährt wird, und zwar in dem Rechteumfang des öffentlichen Schlüssels, der dem geeigneten privaten Schlüssel entspricht.

Bevorzugt wird bei dem Feldmessgerät die Kommunikationsschnittstelle ausgebildet gemäß der Bluetooth-Technologie, zur Etablierung einer Infrarot-Schnittstelle oder einer Kommunikation über ein drahtloses lokales Netzwerk (Wireless Local Area Network WLAN) oder auch gemäß dem Ethernet-Standard.

Vorzugsweise gestattet ein in dem Feldmessgerät hinterlegter Rechteumfang das Zugriffsrecht auf eine Gruppe der folgenden informationstechnischen Inhalte: Parameter für die Darstellung von Daten ohne Einfluss auf messtechnische Funktionen, Parameter für die Inbetriebnahme messtechnischer Funktionen, Parameter für die Kalibrierung des Feldmessgeräts, Parameter für Sonderfunktionen und Service, Parameter für die Freischaltung von Sonderfunktionen.

Bevorzugt wird bei dem Feldmessgerät die Bediensitzung nach wenigstens einem der folgenden Ereignisse beendet: Vornahme einer vorbestimmten Anzahl an Zugriffen auf die informationstechnischen Inhalte des Feldmessgeräts, Ablauf einer vorbestimmten Zeitdauer seit Start der Bediensitzung, Übertragung einer Information zur expliziten Beendigung der Bediensitzung oder Auftreten eines Fehlerzustandes in dem Feldmessgerät. Es können auch mehrere der Kriterien realisiert sein.

Eine andere bevorzugte Ausgestaltung des Feldmessgeräts zeichnet sich dadurch aus, dass die Kommunikationsschnittstelle ein verschlüsseltes Secure-Shell-Netzwerkprotokoll (SSH) implementiert, sodass mit einem externen Kommunikationsmittel über die Kommunikationsschnittstelle eine verschlüsselte Netzwerkverbindung herstellbar ist, wobei die Kommunikationsschnittstelle so eingerichtet ist, dass sich das externe Kommunikationsmittel per Public-Key Authentifizierung gegenüber dem Feldmessgerät authentifizieren muss.

Im Einzelnen gibt es nun eine Vielzahl von Möglichkeiten, das erfindungsgemäße Verfahren zur sicheren Kommunikation mit einem Feldmessgerät und das entsprechende Feldmessgerät auszugestalten. Entsprechende Weiterbildungen sind Gegenstand der Unteransprüche und werden nachfolgend anhand von dargestellten Ausführungsbeispielen beschrieben. In der Zeichnung zeigen:
- Fig. 1: eine schematische Darstellung eines Feldmessgeräts der Prozesstechnik im Kontext eines industriellen Prozesses sowie schematisch ein Verfahren zur sicheren Kommunikation mit dem Feldmessgerät,
- Fig. 2: eine Ausgestaltung des erfindungsgemäßen Verfahrens zur sicheren Kommunikation mit einem Feldmessgerät sowie ein dazu ausgestaltetes Feldmessgerät,
- Fig. 3: eine weitere Ausgestaltung eines erfindungsgemäßen Verfahrens zur sicheren Kommunikation mit einem Feldmessgerät sowie ein ebensolches Feldmessgerät, das mit einem externen Kommunikationsmittel kommuniziert,
- Fig. 4: eine Mehrzahl an erfindungsgemäßen Feldmessgeräten mit übereinstimmenden Rechteumfängen und öffentlichen Schlüsseln,

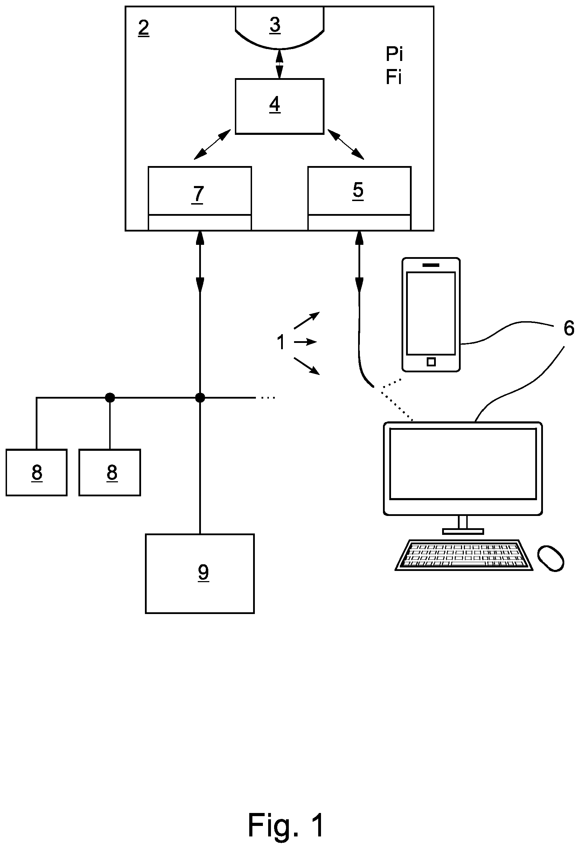

In den Figuren ist jeweils ganz schematisch dargestellt ein Verfahren 1 zur Kommunikation mit einem Feldmessgerät 2 der Prozessmesstechnik. Das Feldmessgerät 2 weist, wie in Fig. 1 dargestellt, einen Sensor 3 auf, mit dem eine Prozessgröße messtechnisch erfasst wird. Beispiele für Sensoren 3 sind Durchflusssensoren nach verschiedenen Messprinzipien, Temperatursensoren, Abstandssensoren auf Radarbasis, pH-Sensoren im Analysebereich usw.

Das Feldmessgerät 2 weist darüber hinaus eine Auswerteeinheit 4 und eine Kommunikationsschnittstelle 5 auf. Die Auswerteeinheit 4 dient der Erfassung und Weiterverarbeitung der von dem Sensor 3 gelieferten Rohmessdaten. Die Auswerteeinheit 4 dient auch der nachgelagerten Auswertung der über die Kommunikationsschnittstelle 5 übermittelten Daten mit externen Kommunikationsmitteln 6, die hier dargestellt sind als ein Handbediengerät wie z. B. ein Smartphone oder ein Tablet und als ein Rechnerarbeitsplatz basierend auf einem Personalcomputer.

Die Kommunikationsschnittstelle 5 dient hier in erster Linie der Konfiguration, der Diagnose und Wartung des Feldmessgeräts 2 durch das externe Kommunikationsmittel 6. In Fig. 1 weist das Feldmessgerät 2 eine weitere Kommunikationsschnittstelle auf, nämlich in Form einer Feldbusschnittstelle 7. Die Feldbusschnittstelle 7 ist im vorliegenden Fall eine Zwei-Leiter-Schnittstelle in Form einer 4-20 mA Stromschleife. Derartige Feldbusschnittstellen dienen der Übermittlung der von dem Feldmessgerät 2 erfassten und bereitgestellten Messdaten an andere Busteilnehmer 8 und an ein Prozessleitsystem 9. Aufgrund der nur relativ geringen erzielbaren Übertragungsraten eignen sich derartige Feldbusschnittstellen 7 nicht sinnvoll zur Konfiguration, Diagnose und Wartung des Feldmessgeräts 2. Eine derartige Funktionalität ist über die Feldbusschnittstelle 7 aus Sicherheitsgründen auch nicht erwünscht, denn die von Feldmessgeräten 2 übermittelten Messdaten haben häufig unmittelbare Auswirkung auf die Steuerung eines industriellen Prozesses, weshalb auf jeden Fall eine unbefugte Beeinflussung des Feldmessgeräts 2 verhindert werden soll, was beispielsweise auch dann gewährleistet ist, wenn die Feldbusschnittstelle 7 überhaupt nicht vorsieht, von extern Daten zu erhalten und diese auch für eine interne Konfiguration auszuwerten. Aus den dargestellten Gründen ist nun ein besonderes Augenmerk auf eine sichere Kommunikation mit dem Feldmessgerät 2 über die Kommunikationsschnittstelle 5 zu richten.

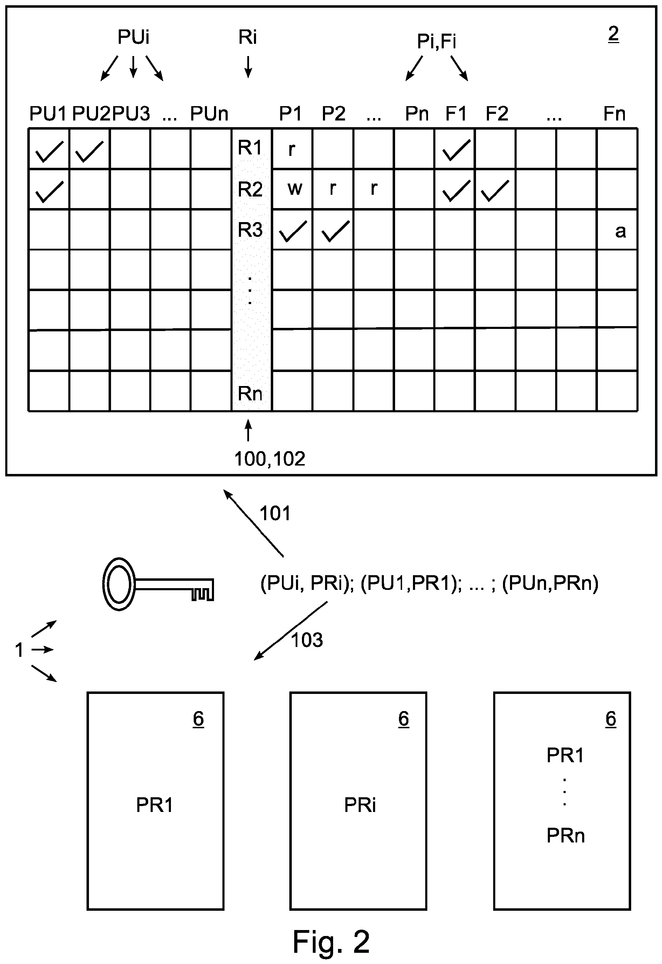

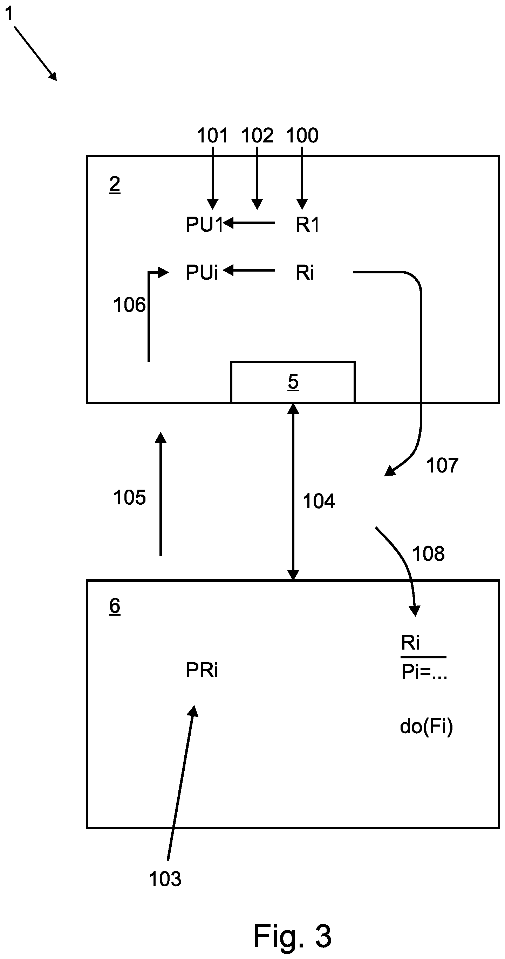

Über die Kommunikationsschnittstelle 5 kann von extern auf informationstechnische Inhalte Pi, Fi des Feldmessgeräts 2 zugegriffen werden. Bei den informationstechnischen Inhalten des Feldmessgeräts 2 kann es sich sowohl um reine Daten/Parameter Pi handeln wie auch um Funktionalitäten Fi, wobei es sich bei den informationstechnischen Inhalten Pi, Fi nicht um die eigentlichen Messdaten handelt. Damit der Zugriff von extern den hohen Sicherheitsanforderungen an industrielle Prozessmesstechnik genügt, ist das im Detail in den Fig. 2 und 3 dargestellte Verfahren 1 zur sicheren Kommunikation mit dem Feldmessgerät 2 in besonderer Weise ausgestaltet.

Bei dem Verfahren 1 zur sicheren Kommunikation mit dem Feldmessgerät 2 ist zunächst vorgesehen, dass in dem Feldmessgerät 2 eine Mehrzahl an Rechteumfängen R1, R2, Ri, Rn hinterlegt wird 100, wobei jeder Rechteumfang Ri definiert, in welchem Umfang auf die informationstechnischen Inhalte Pi, Fi des Feldmessgeräts zugegriffen werden kann. Dies ist in Fig. 2 in Form einer Tabelle dargestellt. Der Rechteumfang R1 gestattet beispielsweise den lesenden Zugriff r auf den Parameter P1 und die Nutzung der Funktionalität F1. Der Rechteumfang R2 gestattet den schreibenden Zugriff w auf den Parameter P1 und einen lesenden Zugriff auf die Paramter P2 und P3 sowie die Nutzung der Funktionalitäten F1 und F2. Der Rechteumfang R3 gestattet den vollen Zugriff auf die Parameter P1 und P2 sowie das dauerhafte Aktivieren a der Funktionalität Fn; dabei kann es sich beispielsweise um das Freischalten einer nachträglich erworbenen Messgerätefunktionalität handeln.

In dem Feldmessgerät 2 wird darüber hinaus eine Mehrzahl öffentlicher Schlüssel PUi (Public Key) einer korrespondierenden Mehrzahl asymmetrischer Schlüsselpaare PUi, PRi gespeichert 101 und jedem öffentlichen Schlüssel PUi wird ein Rechteumfang Ri zugeordnet 102. In der Darstellung gemäß Fig. 2 sind dem öffentlichen Schlüssel PUi die Rechteumfänge R1, R2 zugeordnet, dem öffentlichen Schlüssel PU2 ist der Rechteumfang R1 zugeordnet und dem öffentlichen Schlüssel PUn ist der Rechteumfang R3 zugeordnet worden 102. Ferner wird in dem externen Kommunikationsmittel 6 wenigstens ein privater Schlüssel PRi (Private Key) der korrespondierenden Mehrzahl asymmetrischer Schlüsselpaare PUi, PRi gespeichert 103. Im vorliegenden Fall sind in Fig. 2 insgesamt drei externe Kommunikationsmittel 6 dargestellt, wobei das erste externe Kommunikationsmittel 6 den privaten Schlüssel PR1 aufweist, das zweite externe Kommunikationsmittel 6 den privaten Schlüssel PRi aufweist und das dritte externe Kommunikationsmittel 6 sämtliche privaten Schlüssel PR1 bis PRn aufweist.

In Fig. 3 ist der weitere Verlauf der sicheren Kommunikation zwischen dem Feldmessgerät 2 und dem externen Kommunikationsmittel 6 dargestellt. Bei Kontaktaufnahme 104 des externen Kommunikationsmittels 6 mit dem Feldmessgerät 2 über die Kommunikationsschnittstelle 4 authentisiert sich 105 das externe Kommunikationsmittel 6 mittels einer Public-Key Authentifizierung mit dem gespeicherten privaten Schlüssel PRi gegenüber dem Feldmessgerät 2. Dazu kann das Feldmessgerät 2 beispielsweise eine unverschlüsselte aber signierte Information an das Feldmessgerät 2 senden, es kann aber auch beispielsweise eine Zufallszahl von dem Feldmessgerät 2 erhalten, diese mit seinem privaten Schlüssel PRi verschlüsseln und wieder an das Feldmessgerät 2 zurücksenden.

Das Feldmessgerät authentifiziert 106 daraufhin das externe Kommunikationsmittel 6 unter Verwendung eines geeigneten und im Feldmessgerät 2 gespeicherten öffentlichen Schlüssels PUi. Im Falle des von dem externen Kommunikationsmittel 6 zurückgeschickten, verschlüsselten Zufallswertes entschlüsselt das Feldmessgerät 2 mit seinem geeigneten öffentlichen Schlüssel PUi den verschlüsselten Zufallswert, wobei die Authentifizierung 106 gelungen ist, wenn der gesendete Zufallswert und der empfangene, entschlüsselte Zufallswert identisch sind. Voraussetzung ist in diesem Fall, dass die aufeinanderfolgende Anwendung des öffentlichen Schlüssels PUi und des privaten Schlüssels PRi kommutativ ist.

Nach erfolgreicher Authentifizierung 106 eröffnet das Feldmessgerät 2 eine Bediensitzung 107, d. h. es ist nun eine sichere Kommunikation zwischen dem Feldmessgerät 2 und dem externen Kommunikationsmittel 6 möglich, jedenfalls insoweit sicher, als dass das externe Kommunikationsmittel 6 sicher erkannt worden ist. Das Feldmessgerät 2 gewährt dem externen Kommunikationsmittel 6 dann Zugriff 108 auf seine informationstechnischen Inhalte Pi, Fi und zwar genau in dem Rechteumfang Ri des öffentlichen Schlüssels PUi, der dem geeigneten privaten Schlüssel PRi entspricht. Zur Veranschaulichung dieses Sachverhalts ist in dem externen Kommunikationsmittel 6 in Fig. 3 der Rechteumfang Ri dargestellt, mit dem es nun möglich ist, den Parameter Pi zu beeinflussen und die Funktion Fi im Feldmessgerät aufzurufen (do(Fi)), der Parameter Pi und die Funktion Fi sind aber nicht im externen Kommunikationsmittel 6 lokalisiert.

In den beiden Ausführungsbeispielen in Fig. 1 wird ein Kontakt zwischen dem Feldmessgerät 2 und dem Smartphone 6 als externes Kommunikationsmittel hergestellt mittels einer in Bluetooth-Technologie ausgeführte Kommunikationsschnittstelle 5. Die Verbindung zwischen dem Feldmessgerät 2 und dem Personalcomputer als externes Kommunikationsmittel 6 geschieht hingegen über eine als Ethernet-Schnittstelle ausgebildete Kommunikationsschnittstelle 5.

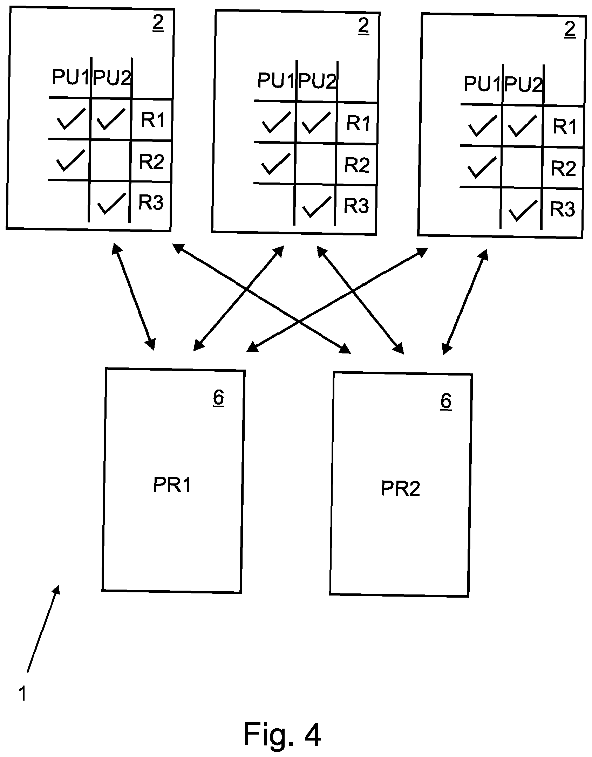

Fig. 4 zeigt eine Ausgestaltung des Verfahrens 1, bei dem in einer Mehrzahl an Feldmessgeräten 2 dieselben Rechteumfänge Ri hinterlegt werden und dieselben öffentlichen Schlüssel PUi einer korrespondierenden Mehrzahl asymmetrischer Schlüsselpaare PUi, PRi gespeichert werden. Dadurch ist ein sehr einfacher Zugriff auf eine Mehrzahl an Feldmessgeräten 2 möglich, ohne dass eine Vielzahl verschiedener asymmetrischer Schlüsselpaare PUi, PRi verteilt werden müsste. Im dargestellten Ausführungsbeispiel gehört die Mehrzahl an Feldmessgeräten 2 zu der Messegerätegruppe eines Anlagenteils einer industriellen Anlage.

Den in Fig. 4 ebenfalls dargestellten externen Kommunikationsmitteln 6 ist es möglich, mit nur einem privaten Schlüssel PR1 bzw. PR2 auf alle Feldmessgeräte 2 zuzugreifen, wenn auch in unterschiedlichem Rechteumfang.

Der Vollständigkeit halber wird darauf hingewiesen, dass die Figuren natürlich nicht nur ein Verfahren 1 zur sicheren Kommunikation mit einem Feldmessgerät 2 der Prozessmesstechnik zeigen, sondern auch ein entsprechendes Feldmessgerät 2 der Prozessmesstechnik mit einem Sensor 3, einer Auswerteeinheit 4 und einer Kommunikationsschnittstelle 5, wobei informationstechnische Inhalte Pi, Fi des Feldmessgeräts 2 für ein externes Kommunikationsmittel 6 über die Kommunikationsschnittstelle 5 von extern zugreifbar sind. Eine sichere Kommunikation wird dadurch gewährleistet, dass in dem Feldmessgerät 2 eine Mehrzahl an Rechteumfängen Ri hinterlegt ist, wobei jeder Rechteumfang Ri definiert, in welchem Umfang auf die informationstechnischen Inhalte Pi, Fi des Feldmessgeräts 2 zugegriffen werden kann.

In dem Feldmessgerät 2 ist ferner eine Mehrzahl öffentlicher Schlüssel PUi einer korrespondierenden Mehrzahl asymmetrischer Schlüsselpaare PUi, PRi gespeichert und jedem öffentlichen Schlüssel PUi ist ein Rechteumfang Ri zugeordnet, wobei in dem externen Kommunikationsmittel 6 wenigstens ein privater Schlüssel PRi der korrespondierenden Mehrzahl asymmetrischer Schlüsselpaare (PUi, PRi) gespeichert ist.

Bei Kontaktaufnahme 104 des externen Kommunikationsmittels 6 mit dem Feldmessgerät 2 über die Kommunikationsschnittstelle 5 authentisiert sich das externe Kommunikationsmittel 6 mittels einer Public-Key Authentifizierung mit dem gespeicherten privaten Schlüssel PRi gegenüber dem Feldmessgerät 2. Daraufhin authentifiziert das Feldmessgerät 2 das externe Kommunikationsmittel 6 unter Verwendung eines geeigneten und im Feldmessgerät 2 gespeicherten öffentlichen Schlüssels PUi. Nach erfolgreicher Authentifizierung eröffnet das Feldmessgerät 2 eine Bediensitzung, in der dem externen Kommunikationsmittel 6 Zugriff auf die informationstechnischen Inhalte Pi, Fi des Feldmessgeräts 2 gewährt wird, und zwar in dem Rechteumfang Ri des öffentlichen Schlüssels PUi, der dem geeigneten privaten Schlüssel PRi entspricht.

### Bezugszeichen

- 1: Verfahren
- 2: Feldmessgerät
- 3: Sensor
- 4: Auswerteeinheit
- 5: Kommunikationsschnittstelle
- 6: externes Kommunikationsmittel
- 7: Feldbusschnittstelle
- 8: Busteilnehmer
- 100: Abspeichern von Rechteumfängen
- 101: Abspeichern von öffentlichen Schlüsseln
- 102: Zuordnen von Rechteumfängen zu öffentlichen Schlüsseln
- 103: Abspeichern von privaten Schlüsseln
- 104: Kommunikationsaufnahme
- 105: Authentisierung
- 106: Authentifizierung
- 107: Bediensitzung eröffnen
- 108: Zugriffgewährung
- Pi, Fi: informationstechnische Inhalte (Daten und Funktionalitäten)
- Ri: Rechteumfang
- PUi: öffentlicher Schlüssel
- PRi: privater Schlüssel

## Patentansprüche

1. Verfahren (1) zur sicheren Kommunikation mit einem Feldmessgerät (2) der Prozessmesstechnik, wobei das Feldmessgerät (2) einen Sensor (3), eine Auswerteeinheit (4), eine Feldbusschnittstelle (7) zur Übermittlung der von dem Feldmessgerät (2) erfassten und bereitgestellten Messdaten an andere Busteilnehmer (8) und/oder an ein Prozessleitsystem (9) und eine Kommunikationsschnittstelle (5) aufweist und wobei ein externes Kommunikationsmittel (6) über die Kommunikationsschnittstelle (5) von extern auf informationstechnische Inhalte (Pi, Fi) des Feldmessgeräts (2) zugreift, wobei es sich bei den informationstechnischen Inhalten (Pi, Fi) nicht um die eigentlichen Messdaten handelt,
wobei in dem Feldmessgerät (2) eine Mehrzahl an Rechteumfängen (Ri) hinterlegt (100) wird, wobei jeder Rechteumfang (Ri) definiert, in welchem Umfang auf die informationstechnischen Inhalte (Pi, Fi) des Feldmessgeräts (2) zugegriffen werden kann,
in dem Feldmessgerät (2) eine Mehrzahl öffentlicher Schlüssel (PUi) einer korrespondierenden Mehrzahl asymmetrischer Schlüsselpaare (PUi, PRi) gespeichert (101) wird und jedem öffentlichen Schlüssel (PUi) wenigstens ein Rechteumfang (Ri) zugeordnet (102) wird und in dem externen Kommunikationsmittel (6) wenigstens ein privater Schlüssel (PRi) der korrespondierenden Mehrzahl asymmetrischer Schlüsselpaare (PUi, PRi) gespeichert (103) wird,
bei Kontaktaufnahme (104) des externen Kommunikationsmittels (6) mit dem Feldmessgerät (2) über die Kommunikationsschnittstelle (6) sich das externe Kommunikationsmittel (6) mittels einer Public-Key Authentifizierung mit dem gespeicherten privaten Schlüssel (PRi) gegenüber dem Feldmessgerät (2) authentisiert (105),
das Feldmessgerät (2) das externe Kommunikationsmittel (6) unter Verwendung eines geeigneten und im Feldmessgerät (2) gespeicherten öffentlichen Schlüssels (PUi) authentifiziert (106) und
das Feldmessgerät (2) nach erfolgreicher Authentifizierung (106) eine Bediensitzung eröffnet (107), in der dem externen Kommunikationsmittel (6) Zugriff auf die informationstechnischen Inhalte (Pi, Fi) des Feldmessgeräts (2) gewährt (108) wird, und zwar in dem Rechteumfang (Ri) des öffentlichen Schlüssels (PUi), der dem geeigneten privaten Schlüssel (PRi) entspricht.

2. Verfahren (1) nach Anspruch 1, **dadurch gekennzeichnet, dass** die Kommunikationsschnittstelle (5) gemäß einer der folgenden Technologien ausgebildet ist: Bluetooth, drahtloses lokales Netzwerk (WLAN), Infrarot (IR), Ethernet.

3. Verfahren (1) nach Anspruch 1 oder 2, **dadurch gekennzeichnet, dass** ein in dem Feldmessgerät (2) hinterlegter Rechteumfang (Ri) das Zugriffsrecht auf eine Gruppe der folgenden informationstechnischen Inhalte gestattet: Parameter für die Darstellung von Daten ohne Einfluss auf messtechnische Funktionen, Parameter für die Inbetriebnahme messtechnischer Funktionen, Parameter für die Kalibrierung des Feldmessgeräts (2), Parameter für Sonderfunktionen und Service, Parameter für die Freischaltung von Sonderfunktionen.

4. Verfahren (1) nach einem der Ansprüche 1 bis 3, **dadurch gekennzeichnet, dass** in einer Mehrzahl an Feldmessgeräten (2) dieselben Rechteumfänge (Ri) hinterlegt werden und dieselben öffentlichen Schlüssel (PUi) einer korrespondierenden Mehrzahl asymmetrischer Schlüsselpaare (PUi, PRi) gespeichert werden.

5. Verfahren (1) nach Anspruch 4, **dadurch gekennzeichnet, dass** die Mehrzahl an Feldmessgeräten (2) zu wenigstens einer der folgenden Messegerätegruppen gehört: die Messgerätegruppe eines bestimmten Messverfahrens, die Messgerätegruppe eines Feldmessgerätemodells, die Messgerätegruppe der Feldmessgeräte (2) eines bestimmten Benutzers, die Messgerätegruppe der Feldmessgeräte (2) einer Anlage oder eines Anlagenteils, die Messgerätegruppe der Feldmessgeräte (2) eines bestimmten zeitlichen Produktionsintervalls oder Installationsintervalls.

6. Verfahren (1) nach einem der Ansprüche 1 bis 5, **dadurch gekennzeichnet, dass** die Bediensitzung nach wenigstens einem der folgenden Ereignisse beendet wird: Vornahme einer vorbestimmten Anzahl an Zugriffen auf die informationstechnischen Inhalte (Pi, Fi) des Feldmessgeräts (2), Ablauf einer vorbestimmten Zeitdauer seit Start der Bediensitzung, Übertragung einer Information zur expliziten Beendigung der Bediensitzung, Auftreten eines Fehlerzustandes in dem Feldmessgerät (2).

7. Verfahren (1) nach einem der Ansprüche 1 bis 6, **dadurch gekennzeichnet, dass** in dem externen Kommunikationsmittel (6) mehrere private Schlüssel (PRi) hinterlegt sind und sich das externe Kommunikationsmittel (6) mittels einer Public-Key Authentifizierung gegenüber dem Feldmessgerät (2) authentisiert, indem Identifikationsdaten des Feldmessgeräts (2) an das externe Kommunikationsmittel übertragen werden, das externe Kommunikationsmittel (6) auf Grundlage der Identifikationsdaten einen geeigneten privaten Schlüssel (PRi) auswählt und das externe Kommunikationsmittel (6) sich mit dem ausgewählten geeigneten privaten Schlüssel (PRi) gegenüber dem Feldmessgerät (2) authentisiert.

8. Verfahren (1) nach einem der Ansprüche 1 bis 7, **dadurch gekennzeichnet, dass** das externe Kommunikationsmittel (6) und das Feldmessgerät (2) über die Kommunikationsschnittstelle (5) mittels eines verschlüsselten Secure-Shell- Netzwerkprotokolls (SSH) in Verbindung treten, wobei sich das externe Kommunikationsmittel (6) per Public-Key Authentifizierung gegenüber dem Feldmessgerät (2) authentifiziert.

9. Feldmessgerät (2) der Prozessmesstechnik mit einem Sensor (3), einer Auswerteeinheit (4), einer Feldbusschnittstelle (7) zur Übermittlung der von dem Feldmessgerät (2) erfassten und bereitgestellten Messdaten an andere Busteilnehmer (8) und/oder an ein Prozessleitsystem (9) und einer Kommunikationsschnittstelle (5), wobei informationstechnische Inhalte (Pi, Fi) des Feldmessgeräts (2) für ein externes Kommunikationsmittel (6) über die Kommunikationsschnittstelle (5) von extern zugreifbar sind und wobei es sich bei den informationstechnischen Inhalten (Pi, Fi) nicht um die eigentlichen Messdaten handelt,
wobei in dem Feldmessgerät (2) eine Mehrzahl an Rechteumfängen (Ri) hinterlegt ist, wobei jeder Rechteumfang (Ri) definiert, in welchem Umfang auf die informationstechnischen Inhalte (Pi, Fi) des Feldmessgeräts (2) zugegriffen werden kann,
in dem Feldmessgerät (2) eine Mehrzahl öffentlicher Schlüssel (PUi) einer korrespondierenden Mehrzahl asymmetrischer Schlüsselpaare (PUi, PRi) gespeichert sind und jedem öffentlichen Schlüssel (PUi) wenigstens ein Rechteumfang (Ri) zugeordnet ist, wobei in dem externen Kommunikationsmittel (6) wenigstens ein privater Schlüssel (PRi) der korrespondierenden Mehrzahl asymmetrischer Schlüsselpaare (PUi, PRi) gespeichert ist,
bei Kontaktaufnahme (104) des externen Kommunikationsmittels (6) mit dem Feldmessgerät (2) über die Kommunikationsschnittstelle (5) sich das externe Kommunikationsmittel (6) mittels einer Public-Key Authentifizierung mit dem gespeicherten privaten Schlüssel (PRi) gegenüber dem Feldmessgerät (2) authentisiert,
das Feldmessgerät (2) das externe Kommunikationsmittel (6) unter Verwendung eines geeigneten und im Feldmessgerät gespeicherten öffentlichen Schlüssels (PUi) authentifiziert und
das Feldmessgerät (2) nach erfolgreicher Authentifizierung eine Bediensitzung eröffnet, in der dem externen Kommunikationsmittel (6) Zugriff auf die informationstechnischen Inhalte (Pi, Fi) des Feldmessgeräts (2) gewährt wird, und zwar in dem Rechteumfang (Ri) des öffentlichen Schlüssels (PUi), der dem geeigneten privaten Schlüssel (PRi) entspricht.

10. Feldmessgerät (2) nach Anspruch 9, **dadurch gekennzeichnet, dass** die Kommunikationsschnittstelle (5) gemäß einer der folgenden Technologien ausgebildet ist: Bluetooth, drahtloses lokales Netzwerk (WLAN), Inrarot (IR), Ethernet.

11. Feldmessgerät (2) nach Anspruch 9 oder 10, **dadurch gekennzeichnet, dass** ein in dem Feldmessgerät (2) hinterlegter Rechteumfang (Ri) das Zugriffsrecht auf eine Gruppe der folgenden informationstechnischen Inhalte (Pi, Fi) gestattet: Parameter für die Darstellung von Daten ohne Einfluss auf messtechnische Funktionen, Parameter für die Inbetriebnahme messtechnischer Funktionen, Parameter für die Kalibrierung des Feldmessgeräts, Parameter für Sonderfunktionen und Service, Parameter für die Freischaltung von Sonderfunktionen.

12. Feldmessgerät (2) nach einem der Ansprüche 9 bis 11, **dadurch gekennzeichnet, dass** die Bediensitzung nach wenigstens einem der folgenden Ereignisse beendet wird: Vornahme einer vorbestimmten Anzahl an Zugriffen auf die informationstechnischen Inhalte des Feldmessgeräts (2), Ablauf einer vorbestimmten Zeitdauer seit Start der Bediensitzung, Übertragung einer Information zur expliziten Beendigung der Bediensitzung, Auftreten eines Fehlerzustandes in dem Feldmessgerät.

13. Feldmessgerät (2) nach einem der Ansprüche 9 bis 12, **dadurch gekennzeichnet, dass** die Kommunikationsschnittstelle (5) ein verschlüsseltes Secure-Shell-Netzwerkprotokoll (SSH) implementiert, so dass mit einem externen Kommunikationsmittel (6) über die Kommunikationsschnittstelle (5) eine verschlüsselte Netzwerkverbindung herstellbar ist, wobei die Kommunikationsschnittstelle (5) so eingerichtet ist, dass sich das externe Kommunikationsmittel per Public-Key Authentifizierung gegenüber dem Feldmessgerät (2) authentifizieren muss.

## Claims

1. Method (1) for secure communication with a field measuring device (2) of process measuring technology, wherein the field measuring device (2) comprises a sensor (3), an evaluation unit (4), a fieldbus interface (7) for the transmission of measurement data detected and provided by the field measuring device (2) to other bus devices (8) and/or to a process control system (9), and a communication interface (5) and wherein an external communication means (6) has external access to information technology content (Pi, Fi) of the field measuring device (2) via the communication interface (5), wherein the information technology content (Pi, Fi) is not the actual measurement data,
wherein a plurality of scopes of rights (Ri) is stored in the field measuring device (2) (100), wherein each scope of rights (Ri) defines to what extent the information technology content (Pi, Fi) of the field measuring device (2) can be accessed,
a plurality of public keys (PUi) of a corresponding plurality of asymmetrical key pairs (PUi, PRi) are stored (101) in the field measuring device (2) and each public key (PUi) is assigned (102) a scope of rights (Ri) and at least one private key (PRi) of the corresponding plurality of asymmetric key pairs (PUi, PRi) is stored (103) in the external communication means (6),
upon establishing contact (104) of the external communication means (6) with the field measuring device (2) via the communication interface (6), the external communication means (6) identifies itself (105) by means of a public-key authentication with the stored private key (PRi) to the field measuring device (2),
the field measuring device (2) authenticates (106) the external communication means (6) using a suitable public key (PUi) stored in the field measuring device (2), and
after successful authentication (106), the field measuring device (2) opens (107) an operating session in which the external communication means (6) is granted access (108) to the information technology content (Pi, Fi) of the field measuring device (2), namely in the scope of rights (Ri) of the public key (PUi) corresponding to the suitable private key (PRi).

2. Method (1) according to claim 1, **characterized in that** the communication interface (5) is designed according to one of the following technologies: Bluetooth, wireless local area network (WLAN), infrared (IR), Ethernet.

3. Method (1) according to claim 2 or 3, **characterized in that** a scope of rights (Ri) stored in the field measuring device (2) allows access to a group of the following information technology content: parameters for the representation of data without influence on metrological functions, parameters for the commissioning of metrological functions, parameters for the calibration of the field measuring device (2), parameters for special functions and service, parameters for the activation of special functions.

4. Method (1) according to any one of claims 1 to 3, **characterized in that** the same scopes of rights (Ri) are stored in a plurality of field measuring devices (2) and the same public keys (PUi) of a corresponding plurality of asymmetric key pairs (PUi, PRi) are stored.

5. Method (1) according to claim 4, **characterized in that** the plurality of field measuring devices (2) belong to at least one of the following measuring device groups: the measuring device group of a specific measuring method, the measuring device group of a field measuring device model, the measuring device group of the field measuring devices (2) of a specific user, the measuring device group of the field measuring devices (2) of a system or a part of the system, the measuring device group of the field measuring devices (2) of a certain time production interval or installation interval.

6. Method (1) according to one of claims 1 to 5, **characterized in that** the operating session is terminated after at least one of the following events: performing a predetermined number of accesses to the information technology content (Pi, Fi) of the field measuring device (2), expiration of a predetermined period of time after the start of the operating session, transmission of information for the explicit termination of the operating session, occurrence of an error condition in the field measuring device (2).

7. Method (1) according to any one of claims 1 to 6, **characterized in that** a plurality of private keys (PRi) are stored in the external communication means (6) and the external communication means (6) identifies itself by means of a public-key authentication to the field meter (2) **in that** identification data of the field measuring device (2) is transmitted to the external communication means, the external communication means (6) selects an suitable private key (PRi) based on the identification data, and the external communication means (6) identifies itslef with the selected suitable private key key (PRi) to the field meter (2).

8. Method (1) according to any one of claims 1 to 7, **characterized in that** the external communication means (6) and the field measuring device (2) connect via the communication interface (5) by means of an encrypted secure shell network protocol (SSH), wherein the external communication means (6) is authenticated for the field measuring device (2) by public-key authentication.

9. Field measuring device (2) of process measuring technology with a sensor (3), an evaluation unit (4), a fieldbus interface (7) for the transmission of measured data detected and provided by the field measuring device (2) to other bus devices (8) and/or to a process control system (9), and a communication interface (5), wherein information technology content (Pi, Fi) of the field measuring device (2) is externally accessible for an external communication means (6) via the communication interface (5) and wherein the information technology content (Pi, Fi) is not the actual measurement data,
wherein a plurality of scopes of rights (Ri) is stored in the field measuring device (2), wherein each scope of rights (Ri) defines to what extent the information technology content (Pi, Fi) of the field measuring device (2) can be accessed,
a plurality of public keys (PUi) of a corresponding plurality of asymmetrical key pairs (PUi, PRi) are stored in the field measuring device (2) and each public key (PUi) is assigned a scope of rights (Ri), wherein at least one private key (PRi) of the corresponding plurality of asymmetric key pairs (PUi, PRi) is stored in the external communication means (6),
upon establishing contact of the external communication means (6) with the field measuring device (2) via the communication interface (6), the external communication means (6) identifies itself by means of a public-key authentication with the stored private key (PRi) to the field measuring device (2), the field measuring device (2) authenticates the external communication means (6) using a suitable public key (PUi) stored in the field measuring device (2), and
after successful authentication, the field measuring device (2) opens an operating session in which the external communication means (6) is granted access to the information technology content (Pi, Fi) of the field measuring device (2), namely in the scope of rights (Ri) of the public key (PUi) corresponding to the suitable private key (PRi).

10. Field measuring device (2) according to claim 9, **characterized in that** the communication interface (5) is designed according to one of the following technologies: Bluetooth, wireless local area network (WLAN), infrared (IR), Ethernet.

11. Field measuring device (2) according to claim 9 or 10, **characterized in that** a scope of rights (Ri) stored in the field measuring device (2) allows access to a group of the following information technology content: parameters for the representation of data without influence on metrological functions, parameters for the commissioning of metrological functions, parameters for the calibration of the field measuring device (2), parameters for special functions and service, parameters for the activation of special functions.

12. Field measuring device (2) according to any one of claims 9 to 11, **characterized in that** the operating session is terminated after at least one of the following events: performing a predetermined number of accesses to the information technology content of the field measuring device (2), expiration of a predetermined period of time after the start of the operating session, transmission of information for the explicit termination of the operating session, occurrence of an error condition in the field measuring device.

13. Field measuring device (2) according to any one of claims 9 to 12, **characterized in that** the communication interface (5) implements an encrypted secure shell network protocol (SSH), so that an encrypted network connection can be produced with an external communication means (6) via the communication interface (5), wherein the communication interface (5) is configured so that the external communication means has to be authenticated by public-key authentication for the field measuring device (2).

## Revendications

1. Procédé (1) de communication sécurisée avec un appareil de mesure de terrain (2) de la technique de mesure de processus, dans lequel l'appareil de mesure de terrain (2) comporte un capteur (3), une unité d'évaluation (4), une interface de bus de terrain (7) pour la transmission des données de mesure acquises et fournies par l'appareil de mesure de terrain (2) à d'autres abonnés de bus (8) et/ou à un système de commande de processus (9) et une interface de communication (5) et dans lequel un moyen de communication externe (6) accède de l'extérieur à des contenus informatiques (Pi, Fi) de l'appareil de mesure de terrain (2) par l'intermédiaire de l'interface de communication (5), dans lequel les contenus informatiques (Pi, Fi) ne sont pas les données de mesure proprement dites,
dans lequel une pluralité d'étendues de droits (Ri) sont stockées (100) dans l'appareil de mesure de terrain (2), dans lequel chaque étendue de droits (Ri) définit l'étendue selon laquelle les contenus informatiques (Pi, Fi) de l'appareil de mesure de terrain (2) sont accessibles,
une pluralité de clés publiques (PUi) d'une pluralité correspondante de paires de clés asymétriques (PUi, PRi) sont stockées (101) dans l'appareil de mesure de terrain (2) et au moins une étendue de droits (Ri) est associée (102) à chaque clé publique (PUi) et au moins une clé privée (PRi) de la pluralité correspondante de paires de clés asymétriques (PUi, PRi) est stockée (103) dans le moyen de communication externe (6), lorsque le moyen de communication externe (6) entre en contact (104) avec l'appareil de mesure de terrain (2) par l'intermédiaire de l'interface de communication (6), le moyen de communication externe (6) s'authentifie (105) auprès de l'appareil de mesure de terrain (2) au moyen d'une authentification par clé publique avec la clé privée (PRi) stockée,
l'appareil de mesure de terrain (2) authentifie (106) le moyen de communication externe (6) à l'aide d'une clé publique (PUi) appropriée stockée dans l'appareil de mesure de terrain (2) et
après une authentification réussie (106), l'appareil de mesure de terrain (2) ouvre (107) une session de travail au cours de laquelle le moyen de communication externe (6) est autorisé (108) à accéder aux contenus informatiques (Pi, Fi) de l'appareil de mesure de terrain (2) selon l'étendue de droits (Ri) de la clé publique (PUi) qui correspond à la clé privée (PRi) appropriée.

2. Procédé (1) selon la revendication 1, **caractérisé en ce que** l'interface de communication (5) est conçue selon l'une des technologies suivantes : Bluetooth, réseau local sans fil (WLAN), infrarouge (IR), Ethernet.

3. Procédé (1) selon la revendication 1 ou 2, **caractérisé en ce qu'**une étendue de droits (Ri) stockée dans l'appareil de mesure de terrain (2) confère le droit d'accéder à un groupe comprenant les contenus informatiques suivants : des paramètres pour la représentation de données sans influence sur les fonctions métrologiques, des paramètres pour la mise en service de fonctions métrologiques, des paramètres pour l'étalonnage de l'appareil de mesure de terrain (2), des paramètres de fonctions spéciales et de service, des paramètres pour le déclenchement de fonctions spéciales.

4. Procédé (1) selon l'une des revendications 1 à 3, **caractérisé en ce que** les mêmes étendues de droits (Ri) et les mêmes clés publiques (PUi) d'une pluralité correspondante de paires de clés asymétriques (PUi, PRi) sont stockées dans une pluralité d'appareils de mesure de terrain (2).

5. Procédé (1) selon la revendication 4, **caractérisé en ce que** la pluralité d'appareils de terrain (2) appartiennent à au moins l'un des groupes suivants d'appareils de mesure : le groupe d'appareils de mesure d'un procédé de mesure particulier, le groupe d'appareils de mesure d'un modèle d'appareil de terrain, le groupe d'appareils de mesure comportant les appareils de mesure de terrain (2) d'un utilisateur déterminé, le groupe d'appareils de mesure comportant les appareils de mesure de terrain (2) d'une installation ou d'une partie d'installation, le groupe d'appareils de mesure comportant les appareils de mesure de terrain (2) d'un intervalle temporel déterminé de production ou d'installation.

6. Procédé (1) selon l'une des revendications 1 à 5, **caractérisé en ce que** la session de travail est terminée après au moins l'un des événements suivants : la réalisation d'un nombre prédéterminé d'accès aux contenus informatiques (Pi, Fi) de l'appareil de mesure de terrain (2), l'expiration d'une période de temps prédéterminée depuis le début de la session de travail, la transmission d'une information pour la terminaison explicite de la session de travail, l'apparition d'une condition d'erreur dans l'appareil de mesure de terrain (2) .

7. Procédé (1) selon l'une des revendications 1 à 6, **caractérisé en ce qu'**une pluralité de clés privées (PRi) sont stockées dans le moyen de communication externe (6) et le moyen de communication externe (6) s'authentifie auprès de l'appareil de mesure de terrain (2) au moyen d'une authentification par clé publique en transmettant des données d'identification de l'appareil de mesure de terrain (2) au moyen de communication externe, le moyen de communication externe (6) sélectionne une clé privée (PRi) appropriée sur la base des données d'identification et le moyen de communication externe (6) s'authentifie auprès de l'appareil de mesure de terrain (2) avec la clé privée (PRi) appropriée sélectionnée.

8. Procédé (1) selon l'une des revendications 1 à 7, **caractérisé en ce que** le moyen de communication externe (6) et l'appareil de mesure de terrain (2) communiquent par l'intermédiaire de l'interface de communication (5) au moyen d'un protocole de réseau Secure Shell (SSH) crypté, dans lequel le moyen de communication externe (6) s'authentifie auprès de l'appareil de mesure de terrain (2) par authentification par clé publique.

9. Appareil de mesure de terrain (2) de la technique de mesure de processus comprenant un capteur (3), une unité d'évaluation (4), une interface de bus de terrain (7) pour la transmission des données de mesure acquises et fournies par l'appareil de mesure de terrain (2) à d'autres abonnés de bus (8) et/ou à un système de commande de processus (9) et une interface de communication (5), dans lequel des contenus informatiques (Pi, Fi) de l'appareil de mesure de terrain (2) sont accessibles de l'extérieur à un moyen de communication externe (6) par l'intermédiaire de l'interface de communication (5) et dans lequel les contenus informatiques (Pi, Fi) ne sont pas les données de mesure proprement dites,
dans lequel une pluralité d'étendues de droits (Ri) sont stockées dans l'appareil de mesure de terrain (2), dans lequel chaque étendue de droits (Ri) définit l'étendue selon laquelle les contenus informatiques (Pi, Fi) de l'appareil de mesure de terrain (2) sont accessibles,
une pluralité de clés publiques (PUi) d'une pluralité correspondante de paires de clés asymétriques (PUi, PRi) sont stockées dans l'appareil de mesure de terrain (2) et au moins une étendue de droits (Ri) est associée à chaque clé publique (PUi), dans lequel au moins une clé privée (PRi) de la pluralité correspondante de paires de clés asymétriques (PUi, PRi) est stockée dans le moyen de communication externe (6),
lorsque le moyen de communication externe (6) entre en contact (104) avec l'appareil de mesure de terrain (2) par l'intermédiaire de l'interface de communication (5), le moyen de communication externe (6) s'authentifie auprès de l'appareil de mesure de terrain (2) au moyen d'une authentification par clé publique avec la clé privée (PRi) stockée,
l'appareil de mesure de terrain (2) authentifie le moyen de communication externe (6) à l'aide d'une clé publique (PUi) appropriée stockée dans l'appareil de mesure de terrain et
après une authentification réussie, l'appareil de mesure de terrain (2) ouvre une session de travail au cours de laquelle le moyen de communication externe (6) est autorisé à accéder aux contenus informatiques (Pi, Fi) de l'appareil de mesure de terrain (2) selon l'étendue de droits (Ri) de la clé publique (PUi) qui correspond à la clé privée (PRi) appropriée.

10. Appareil de mesure de terrain (2) selon la revendication 9, **caractérisé en ce que** l'interface de communication (5) est conçue selon l'une des technologies suivantes : Bluetooth, réseau local sans fil (WLAN), infrarouge (IR), Ethernet.

11. Appareil de mesure de terrain (2) selon la revendication 9 ou 10, **caractérisé en ce qu'**une étendue de droits (Ri) stockée dans l'appareil de mesure de terrain (2) confère le droit d'accéder à un groupe comprenant les contenus informatiques suivants (Pi, Fi) : des paramètres pour la représentation de données sans influence sur les fonctions métrologiques, des paramètres pour la mise en service de fonctions métrologiques, des paramètres pour l'étalonnage de l'appareil de mesure de terrain, des paramètres de fonctions spéciales et de service, des paramètres pour le déclenchement de fonctions spéciales.

12. Appareil de mesure de terrain (2) selon l'une des revendications 9 à 11, **caractérisé en ce que** la session de travail est terminée après au moins l'un des événements suivants : la réalisation d'un nombre prédéterminé d'accès aux contenus informatiques de l'appareil de mesure de terrain (2), l'expiration d'une période de temps prédéterminée depuis le début de la session de travail, la transmission d'une information pour la terminaison explicite de la session de travail, l'apparition d'une condition d'erreur dans l'appareil de mesure de terrain.

13. Appareil de mesure de terrain (2) selon l'une des revendications 9 à 12, **caractérisé en ce que** l'interface de communication (5) met en œuvre un protocole de réseau Secure Shell (SSH) crypté, de sorte qu'une connexion de réseau cryptée peut être établie avec un moyen de communication externe (6) par l'intermédiaire de l'interface de communication (5), dans lequel l'interface de communication (5) est configurée de telle sorte que le moyen de communication externe doit s'authentifier auprès de l'appareil de mesure de terrain (2) par authentification par clé publique.
